(19) Europäisches Patentamt
European Patent Office
Office européen des brevets

(11) **EP 1 876 297 B1**

(12) **EUROPÄISCHE PATENTSCHRIFT**

(45) Veröffentlichungstag und Bekanntmachung des Hinweises auf die Patenterteilung:
**17.06.2009 Patentblatt 2009/25**

(51) Int Cl.:
*E01C 19/23* (2006.01)   *E02D 3/026* (2006.01)
*G01S 13/87* (2006.01)   *G05D 1/02* (2006.01)

(21) Anmeldenummer: **07008313.4**

(22) Anmeldetag: **24.04.2007**

(54) **Vorrichtung und Verfahren zur Ermittlung der Position einer Straßenwalze relativ zu einem Straßenfertiger**

Device and method for determining the position of a road compactor with respect to a finisher

Dispositif et procédé destinés à la détermination de la position d'un rouleau compresseur par rapport à un finisseur

(84) Benannte Vertragsstaaten:
**ES FR IT**

(30) Priorität: **28.04.2006 DE 102006019841**

(43) Veröffentlichungstag der Anmeldung:
**09.01.2008 Patentblatt 2008/02**

(73) Patentinhaber: **MOBA-Mobile Automation GmbH**
**65604 Elz (DE)**

(72) Erfinder:
• **Harms, Paul**
**65589 Steinbach (DE)**

• **Wendebaum, Jochen**
**65604 Elz (DE)**

(74) Vertreter: **Stöckeler, Ferdinand et al**
**Schoppe, Zimmermann,**
**Stöckeler & Zinkler**
**Postfach 246**
**82043 Pullach bei München (DE)**

(56) Entgegenhaltungen:
**EP-A- 1 708 065        WO-A-94/25680**
**FR-A- 2 707 755        US-A- 5 295 551**
**US-B1- 6 188 942**

**Beschreibung**

Die vorliegende Erfindung bezieht sich auf das Ermitteln der Position einer Straßenwalze relativ zu einem Straßenfertiger.

Im Straßenbau ist es wichtig, dass der von Straßenfertigern aufgebrachte Straßenbelag wie beispielsweise Asphaltmaterial anschließend von Straßenwalzen verdichtet wird. Dazu bewegen sich eine oder mehrere Straßenwalzen während des Arbeitseinsatzes in einem von einem oder mehreren Straßenfertigern vorgegebenen Gebiet, in dem Asphaltmaterial ausgebracht wurde. Straßenwalzen und Straßenfertiger bilden eine Arbeitseinheit, die auf der Baustelle in der Regel dicht zusammen bleiben.

Um das Asphaltmaterial ausreichend zu verdichten, wird jeder Bereich der Straße mehrmals von einer Straßenwalze überfahren. Die Anzahl der Überfahrten ist für die Qualität besonders wichtig. Um die Anzahl der Überfahrten bestimmen zu können, wird die Position der Straßenwalze für verschiedene Zeitpunkte benötigt. Wenn die Position und die Geschwindigkeit des Straßenfertigers bekannt ist, ist es ausreichend, die Position der Straßenwalze relativ zum Straßenfertiger zu bestimmen.

Eine Positionsbestimmung eines mobilen Objektes mittels Transpondern an fixierten Orten mit bekannter Position ist in der WO-A-2005/015257 und in der EP-A-1 708 065 beschrieben und eine Bestimmung der Anzahl von Walzenüberfahrten über Straßenabschnitte ist in der US-A-5942679 angegeben. Eine Ermittlung der Position der Straßenwalze zu dem Straßenfertiger ist weiterhin auch in der US-A-5942679 beschrieben.

Die Aufgabe der vorliegenden Erfindung besteht darin, eine Vorrichtung und ein Verfahren zu schaffen, die es ermöglichen, die Position einer Straßenwalze relativ zu einem Straßenfertiger besser zu ermitteln.

Diese Aufgabe wird durch eine Vorrichtung gemäß Anspruch 1 und ein Verfahren gemäß Anspruch 10 gelöst.

Der Kerngedanke der vorliegenden Erfindung besteht darin, die Position der Straßenwalze relativ zu dem Straßenfertiger zu jedem gegebenen Zeitpunkt durch Laufzeitmessungen von Funksignalen zu ermitteln. Über eine entsprechende Auswerteeinheit kann daraus die Anzahl der Straßenwalzenüberfahrten über Abschnitte eines Straßenbelags ermittelt werden. Gleichzeitig kann damit auch die Geschwindigkeit der Straßenwalze bzw. des Straßenfertigers ermittelt werden. Diese Positionsbestimmung wird somit für die Qualitätsüberwachung der durchgeführten Walzarbeiten verwendet.

Vorzugsweise wird dazu von einer Sende- und Empfangseinrichtung auf der Straßenwalze ein Funksignal versendet, das von zumindest zwei räumlich verteilten Transpondern auf dem Straßenfertiger derart beantwortet wird, dass jede empfangene Antwort dem jeweiligen Transponder zugeordnet werden kann. Die Laufzeit jedes Signals wird in der Sende- und Empfangseinrichtung ermittelt und damit die Entfernung jedes Transponders von der Sende- und Empfangseinrichtung und somit von der Straßenwalze festgestellt. Die Position der Sende- und Empfangseinrichtung wird mittels der so erhaltenen Entfernungsinformation berechnet.

Um die Position der Straßenwalze relativ zum Straßenfertiger zu bestimmen, werden eine oder mehrere Entfernungsmessungen zum Straßenfertiger derart vorgenommen, dass die Entfernung der Straßenwalze zu mehreren Transpondern, beispielsweise zur linken und rechten Seite, des Straßenfertigers gemessen werden kann. Mit zwei Messungen zu den Seiten des Straßenfertigers können die Entfernungen der Straßenwalze zum Straßenfertiger und von der Straßenwalze zum Rand des Einsatzgebietes berechnet werden, wenn der Rand des Einsatzgebietes mit dem Rand des Straßenfertigers übereinstimmt .

Darüber hinaus können noch weitere Transponder an dem Straßenfertiger angebracht sein, aber auch an anderen Straßenwalzen, an einer anderen, beliebigen Baumaschine oder an Baustelleneinrichtung, an anderen Punkten im Gelände oder an Personen befestigt sein. Damit ist eine absolute Positionsbestimmung möglich und die Qualität der Positionsbestimmung wird verbessert. Außerdem lassen sich dadurch Abstandsmessungen zu weiteren Referenzpunkten durchführen, um basierend darauf Gefahrensituationen durch Kollisionen und gefährliche Annäherungen zu vermeiden.

Mit den durchgeführten Messungen ist es außerdem möglich, die Fahrgeschwindigkeit des Straßenfertigers zu bestimmen, indem mehrere aufeinanderfolgende Messungen von der Straßenwalze zum Straßenfertiger vorgenommen werden und die Geschwindigkeit wie folgt berechnet wird:

$$\Delta v \;=\; \frac{\Delta s}{\Delta t}$$

wobei $\Delta s$ der Unterschied der Entfernungsmessungen ist und $\Delta t$ der Zeitabstand der Messungen, $\Delta v$ ist die Geschwindigkeitsdifferenz zwischen dem Straßenfertiger und der Straßenwalze. Um die Straßenfertigergeschwindigkeit zu ermitteln, ist zu $\Delta v$ die Straßenwalzengeschwindigkeit $v_w$ zu addieren. Eine weitere Möglichkeit zur Ermittlung des Geschwindigkeitsunterschieds ist die Messung des Dopplereffekts des empfangenen Messsignals, d.h. die Messung der Frequenzverschiebung infolge der Relativgeschwindigkeit der Straßenwalze in Bezug auf dem Straßenfertiger.

Die vorliegende Erfindung ist nicht auf eine Walze und einen Fertiger beschränkt. Vielmehr können auch mehrere Walzen das erfindungsgemäße Konzept gleichzeitig und unabhängig voneinander nutzen, um ihre Positionen bezüglich eines oder bezüglich mehrerer Fertiger bestimmen zu können. Zu diesem Zweck kann jede der Walzen eine entsprechende Sende-und Empfangseinrichtung und eine entsprechende Auswerteeinrichtung aufweisen.

Bevorzugte Ausführungsbeispiele der vorliegenden Erfindung werden nachfolgend bezugnehmend auf die beiliegenden Zeichnungen näher erläutert. Es zeigen:

Fig. 1 eine schematische Darstellung zur Laufzeitmessung von Funksignalen unter Verwendung einer Sendeund Empfangseinrichtung sowie drei Transpondern;

Fig. 2 eine Draufsicht auf eine Straßenwalze hinter einem Straßenfertiger (bzw. einer Fertigerbohle) mit Verdichtungsbahnen;

Fig. 3 eine Darstellung der geometrischen Größen zur Bestimmung der Straßenwalzenposition.

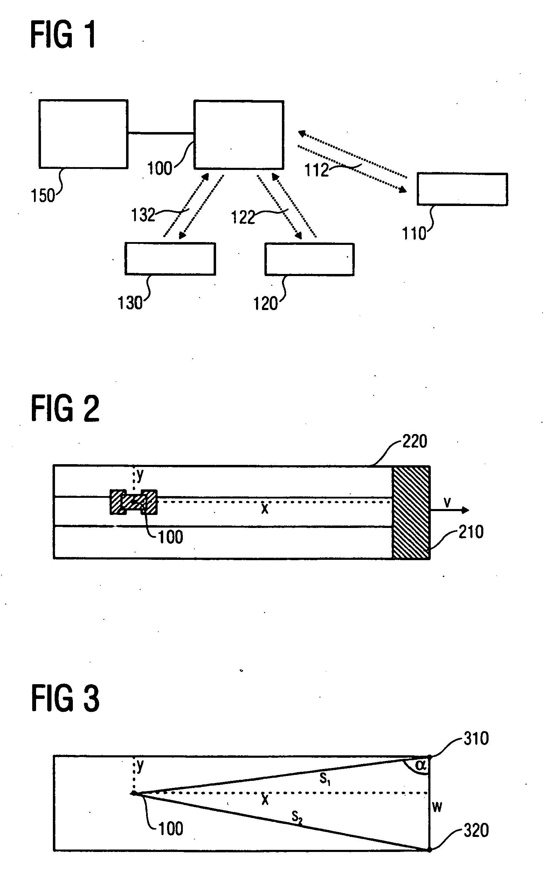

In Fig. 1 ist gezeigt, wie die Sende- und Empfangseinrichtung 100, mit der die Straßenwalze ausgestattet ist, Funksignale aussendet, die von den Transpondern 110, 120 und 130 beantwortet werden. Die Antwort der Transponder ist dabei derart gestaltet, dass die Sende- und Empfangseinrichtung 100 die Antwortsignale eindeutig den Transpondern zuordnen kann, d.h. der Transponder 110 sendet ein Antwortsignal 112, der Transponder 120 ein Antwortsignal 122 und der Transponder 130 sendet ein Antwortsignal 132. Die Transponder senden beispielsweise Antwortsignale, welche eine Transponder-spezifische Kennung wie beispielsweise eine spezifische Frequenz- oder Phasenverschiebung im Antwortsignal aufweisen. Die Sende- und Empfangseinrichtung 100 erfasst für jeden Transponder die Zeit zwischen dem Senden des Sendesignals und dem Empfang der Transponderspezifischen Antwortsignale und gibt die die einzelnen Transponder betreffenden Laufzeiten an die Auswerteeinheit 150 weiter, die daraus die Entfernung der Sende- und Empfangseinrichtung 100 zu den einzelnen Transpondern berechnet.

In Fig. 2 ist schematisch gezeigt, wie die Straßenwalze mit der Sende- und Empfangseinrichtung 100 einem Straßenfertiger 210 in einem Abstand x folgt. Der Abstand der Straßenwalze 100 zum äußeren Rand 220, der von dem Straßenfertiger 210 vorgegeben ist, ist mit y bezeichnet. Der Straßenfertiger 210 bewegt sich dabei mit einer Geschwindigkeit v und die relative Position der Straßenwalze 100, die durch die Werte x und y gegeben ist, ändert sich mit der Zeit sofern die Straßenwalzengeschwindigkeit $v_w$ nicht mit der Geschwindigkeit v des Straßenfertigers 210 übereinstimmt.

In Fig. 3 sind die geometrischen Größen dargestellt, die für die Bestimmung der Werte x und y aus den Entfernungen der Straßenwalze 100 zu den Randpunkten 310 und 320 des Straßenfertigers 210 relevant sind. Dabei wird vorausgesetzt, dass ein Transponder am rechten Rand 320 und ein Transponder am linken Rand 310 des Straßenfertigers 210 angebracht ist und dass sich die Transponder in einem Abstand w befinden. Der Abstand der Straßenwalze 100 zu dem linken Rand 310 des Straßenfertiger 210 ist mit $s_1$ und der Abstand zum rechten Rand 320 mit $s_2$ gekennzeichnet. Der Winkel, der am linken Rand 310 zwischen dem Straßenfertiger 210 und der Verbindungslinie zur Straßenwalze 100 aufgespannt wird, ist mit α bezeichnet. Als Resultat der oben beschriebenen Entfernungsmessung werden die Werte $s_1$ und $s_2$ erhalten. Da außerdem der Wert w bekannt ist, werden zuerst die Hilfswerte s und r wie folgt gebildet:

$$s = \frac{s_1 + s_2 + w}{2} \quad , \quad r = \sqrt{\frac{(s-s_1)(s-s_2)(s-w)}{s}}$$

und damit wird der Winkel α aus der Gleichung:

$$\tan\frac{\alpha}{2} = \frac{r}{s-s_2}$$

ermittelt. Schließlich werden x und y aus den Beziehungen:

$$x = s_1 \sin\alpha \quad \text{und} \quad y = s_1 \sin(90° - \alpha)$$

berechnet.

Diese Ortsbestimmung wird nun fortlaufend aktualisiert, d.h. mit einem regelmäßigen oder unregelmäßigen Zeitintervall ständig wiederholt. Aus der Positionsveränderung während dieses Zeitintervalls berechnet die Auswerteeinheit 150, gemäß der obigen Formel, die Geschwindigkeit $v_w$ der Straßenwalze 100 relativ zum Straßenfertiger 210 bzw. bei Berücksichtigung der Geschwindigkeit der Straßenwalze 100, die Absolutgeschwindigkeit v des Straßenfertigers 210. Die Absolutgeschwindigkeit kann dann bei der Bestimmung der Absolutposition der Straßenwalze verwandt werden.

Bei einem weiteren Ausführungsbeispiel kann der Geschwindigkeitsunterschied zwischen der Straßenwalze 100 und dem Straßenfertiger 210 mit Hilfe des Dopplereffekts, d.h. unter Verwendung des Frequenzunterschieds zwischen dem ausgesandten und dem empfangenen Signal, ermittelt werden.

Bei einem weiteren Ausführungsbeispiel sind ein oder mehrere weitere Transponder an beliebigen Punkten außerhalb des Straßenfertigers 210 positioniert. Diese Punkte können sich an anderen Straßenfertigern, auf anderen Straßenwalzen, auf anderen Baumaschinen oder Baustelleneinrichtungen befinden. Transponder können aber auch an anderen Punkten im Gelände bzw. auch an Personen angebracht werden. Diese zusätzlichen Transponder können ebenfalls zur Entfernungsmessung herangezogen werden, um somit die Positionsbestimmung zu verbessern (z.B. über eine Mittelung der erhaltenen Werte) bzw. die Positionsbestimmung auch dann sicherzustellen, wenn ein Transponder an dem Randpunkt 310 oder 320 ausfällt oder verdeckt ist. Darüber hinaus können die zusätzlichen Transponder auch zum rechtzeitigen Erkennen von Gefahrensituationen und somit zur Vermeidung von Unfälle genutzt werden. Diese zusätzlichen Transponder, sofern sie an nichtbewegten Objekten angebracht sind, eröffnen insbesondere die Möglichkeit, dass nicht nur die Relativgeschwindigkeit des Straßenfertigers 210 und der Straßenwalze 100 bestimmt werden kann, sondern auch deren Absolutgeschwindigkeit direkt ermittelt werden kann.

Aus den so gewonnenen Positionsdaten und der Absolutgeschwindigkeit v des Straßenfertigers 210 kann die Auswerteeinheit 150 genau bestimmen, wie oft die Straßenwalze 100 einen gegebenen Straßenabschnitt passiert hat. Im Folgenden wird ein Ausführungsbeispiel beschrieben wie dies erfolgen kann.

Die Positionsbestimmung wird in einem zeitlichen Abstand $\Delta t$ von beispielsweise einer Sekunde fortlaufend wiederholt. In diesem Zeitabschnitt ändert sich die Absolutposition entlang der x-Richtung um: $\Delta x^{abs} = \Delta x + v \, \Delta t$, wobei $\Delta x$ die Differenz der x-Werte aus den Messungen im zeitlichen Abstand von $\Delta t$ ist und die Geschwindigkeit v des Fertigers in diesem Ausführungsbeispiel als konstant angenommen wird. Da sich bei dem angenommenen Beispiel der Straßenfertiger 210 nicht entlang der y-Richtung bewegt, gilt: $\Delta y^{abs} = \Delta y$, d.h. es erfolgt keine Korrektur für die y-Werte infolge der Bewegung des Straßenfertigers. Diese absoluten Positionen werden von der Auswerteeinheit 150 fortlaufend im zeitlichen Abstand $\Delta t$ erfasst. Außerdem wird in der Auswerteeinheit 150 die Straße in Sektoren eingeteilt, deren Länge und Breite beispielsweise dem Abstand entspricht, den die Straßenwalze 100 bei der optimalen Straßenwalzengeschwindigkeit innerhalb von $\Delta t$, d.h. in dem hier gewählten Beispiel von einer Sekunde, zurücklegt.

Das Zählen der Überfahrten kann nun wie folgt geschehen. Die Auswerteeinheit weist allen Sektoren einen Wert zu, der bei jeder Überfahrt um eins erhöht wird. Die Auswerteeinheit 150 erfasst dazu alle Sektoren, die gleichzeitig überfahren werden, d.h. die Breite der Straßenwalze 100 wird berücksichtigt. Diese Werte können dem Fahrer der Straßenwalze 100 über einen Bildschirm, der die Straße mit den Sektoren darstellt, angezeigt werden. In einem anderen Ausführungsbeispiel, kann jede Überfahrt eines Sektors zu einer Farbveränderung des entsprechenden Sektors auf dem Bildschirm führen. Ein Vorteil dieses Ausführungsbeispiels ist, dass ein Überschreiten bzw. Unterschreiten der optimalen Geschwindigkeit der Straßenwalze 100 auf dem Bildschirm dadurch sichtbar wird, dass Sektoren übersprungen werden bzw. doppelt gezählt werden. Diese Fehlzählungen werden von der Auswerteeinheit 150 berichtigt und außerdem wird der Fahrer der Straßenwalze 100 darüber entsprechend informiert, so dass er die Geschwindigkeit korrigieren kann.

Zur Qualitätssicherung erhält der Fahrer somit direkt signalisiert, wie oft welcher Straßenabschnitt von der Straßenwalze 100 noch passiert werden muss. Da dies unabhängig vom subjektiven Empfinden des Fahrers ist, stellt das erfindungsgemäße Konzept einen großen Vorteil da.

Ein weiterer Vorteil besteht in der Vermeidung überflüssiger Überfahrten, was einen Kostenvorteil bei der Fertigung der Straße darstellt. Darüber hinaus können in weiteren Ausführungsbeispielen, zusätzliche Transponder an weiteren Referenzpunkten angebracht sein, so dass der Abstand und die relative Geschwindigkeit zu diesen Punkten ermittelt werden können. Das ist insbesondere vorteilhaft, um gefährliche Annäherungen und Kollisionen z. B. zu Personen bzw. zu anderen Baustellengeräten zu vermeiden. Neben den Kosteneinsparungen bei gleichzeitiger Qualitätssicherung bietet das erfindungsgemäße Konzept also auch Vorteile bei der Verbesserung des Arbeitsschutzes auf den Baustellen.

Insbesondere wird darauf hingewiesen, dass abhängig von den Gegebenheiten das erfindungsgemäße Schema auch in Software implementiert sein kann. Die Implementierung kann auf einem digitalen Speichermedium, insbesondere einer Diskette oder einer CD mit elektronisch auslesbaren Steuersignalen erfolgen, die so mit einem programmierbaren Computersystem zusammenwirken können, dass das entsprechende Verfahren ausgeführt wird.

**Patentansprüche**

1. Vorrichtung zur Ermittlung der Position einer Straßenwalze (100) relativ zu einem Straßenfertiger (210), mit folgenden Merkmalen:

   einer an der Straßenwalze anbringbaren Sende- und Empfangseinrichtung (100) zum Senden von Sendesignalen und zum Empfangen von durch das Sendesignal verursachten Empfangssignalen (112, 122) von zumindest zwei voneinander beabstandeten Referenzpunkten (310, 320) auf dem Straßenfertiger (210); und einer Auswerteeinheit (150) zum Ermitteln der Position der Straßenwalze (100) relativ zu dem Straßenfertiger (210) basierend auf einer Laufzeit zwischen dem Senden des Sendesignals und dem Empfang eines ersten Empfangssignal (112) von dem ersten Referenzpunkt (310) und einer Laufzeit zwischen dem Senden des Sendesignals und dem Empfang auf eines zweiten Empfangssignal (122) von dem zweiten Referenzpunkt (320), wobei die Auswerteeinheit ausgebildet ist, um die Anzahl von Überfahrten der Straßenwalze (100) über einen Abschnitt des von dem Straßenfertiger (210) aufgebrachten Straßenbelags unter Verwendung der über der Zeit ermittelten Positionen der Straßenwalze (100) zu ermitteln.

2. Vorrichtung gemäß Anspruch 1, bei der das erste Empfangssignal (112) eine erste Kennung und das zweite Empfangssignal (122) eine zweite Kennung aufweist.

3. Vorrichtung gemäß Anspruch 1 oder Anspruch 2, bei der der oder die Referenzpunkte Transponder aufweisen.

4. Vorrichtung gemäß einem der Ansprüche 1 bis 3, die ferner eine Einrichtung zum Ermitteln einer Geschwindigkeitsdifferenz zwischen der Straßenwalze (100) und dem Straßenfertigers (210) aufweist.

5. Vorrichtung gemäß Anspruch 4, die ferner eine Einrichtung zum Ermitteln einer Absolutgeschwindigkeit des Straßenfertigers (210) auf der Grundlage der Geschwindigkeitsdifferenz und einer Absolutgeschwindigkeit der Straßenwalze (100) aufweist.

6. Vorrichtung gemäß einem der Ansprüche 1 bis 5, die ferner eine Einrichtung zum Ermitteln einer Geschwindigkeitsdifferenz zwischen der Straßenwalze (100) und dem Straßenfertiger (210) basierend auf dem Dopplereffekt aufweist.

7. Vorrichtung gemäß einem der Ansprüche 1 bis 6, die ferner ausgelegt ist, um weitere Empfangssignale (132) von weiteren Referenzpunkten zu empfangen und basierend darauf den Abstand zu weiteren Objekten zu ermitteln.

8. Straßenwalze (100) mit einer Vorrichtung nach einem der Ansprüche 1 bis 7.

9. Verfahren zum Ermitteln der Position einer Straßenwalze (100) relativ zu einem Straßenfertiger (210), mit folgenden Schritten:

   Senden von Sendesignalen von der Straßenwalze (100) an zumindest zwei auf dem Straßenfertiger (210) angebrachte Referenzpunkte;
   Empfangen eines durch das Sendesignal verursachten ersten Empfangssignals (112) von einem ersten Referenzpunkt (310) auf dem Straßenfertiger (210);
   Empfangen eines durch das Sendesignal verursachten zweiten Empfangssignals (122) von einem zweiten Referenzpunkt (320) auf dem Straßenfertiger (210);
   Ermitteln der Position der Straßenwalze (100) relativ zu dem Straßenfertiger (210) basierend auf einer Laufzeit zwischen dem Senden des Sendesignals und dem Empfang des ersten Empfangsignals (112) und einer Laufzeit zwischen dem Senden des Sendesignals und dem Empfang des zweiten Empfangsignals (122); und
   Ermitteln der Anzahl der Überfahrten der Straßenwalze (100) über einen Abschnitt des von dem Straßenfertiger (210) aufgebrachten Straßenbelags unter Verwendung der über der Zeit ermittelten Positionen der Straßenwalze (100).

10. Verfahren gemäß Anspruch 9, bei der das erste Empfangssignal (112) eine erste Kennung und das zweite Empfangssignal (122) eine zweite Kennung aufweist.

11. Verfahren gemäß einem der Ansprüche 9 bis 10, welches ferner folgenden Schritt aufweist:

Ermitteln einer Geschwindigkeitsdifferenz zwischen der Straßenwalze (100) und dem Straßenfertiger (210).

12. Verfahren gemäß Anspruch 11, welches ferner folgenden Schritt aufweist:

Ermitteln einer Absolutgeschwindigkeit des Straßenfertigers (210) auf der Grundlage der Geschwindigkeitsdifferenz und einer Absolutgeschwindigkeit der Straßenwalze (100).

13. Verfahren gemäß Anspruch 9 bis 12, welches ferner folgenden Schritt aufweist:

Ermitteln der Geschwindigkeitsdifferenz zwischen der Straßenwalze (100) und dem Straßenfertiger (210), basierend auf dem Dopplereffekt.

14. Verfahren gemäß einem der Ansprüche 9 bis 13, welches ferner folgenden Schritt aufweist:

Empfangen von weiteren Empfangssignalen (132) von weiteren Referenzpunkten und basierend darauf Ermitteln des Abstands zu weiteren Objekten.

15. Verfahren zum Herstellen einer Straße mit folgenden Schritten:

Aufbringen eines Straßenbelags durch einen Straßenfertiger (210); und
Verdichten des Straßenbelags durch eine Straßenwalze (100) unter Verwendung eines Verfahrens nach einem der Ansprüche 9 bis 14.

**Claims**

1. Device for determining the position of a road roller (100) relative to a road finisher (210), comprising:

a transceiver (100) mountable to the road roller for transmitting transmit signals and for receiving receive signals (112, 122) caused by the transmit signal from at least two reference points (310, 320) spaced apart from each other on the road finisher (210); and
an evaluation unit (150) for determining the position of the road roller (100) relative to the road finisher (210) based on a run time between transmitting the transmit signal and receiving a first receive signal (112) from the first reference point (310) and a run time between transmitting the transmit signal and receiving a second receive signal (122) from the second reference point (320),
wherein the evaluation unit is formed to determine the number of times the road roller (100) has passed over a section of the road surface deposited by the road finisher (210) using the positions of the road roller (100) determined over time.

2. Device according to claim 1, wherein the first receive signal (112) comprises a first identification and the second receive signal (122) comprises a second identification.

3. Device according to claim 1 or claim 2, wherein the reference point/s comprise/s transponders.

4. Device according to one of claims 1 to 3, further comprising means for determining a speed difference between the road roller (100) and the road finisher (210).

5. Device according to claim 4, further comprising means for determining an absolute speed of the road finisher (210) on the basis of the speed difference and an absolute speed of the road roller (100).

6. Device according to one of claims 1 to 5, further comprising means for determining a speed difference between the road roller (100) and the road finisher (210) based on the Doppler effect.

7. Device according to one of claims 1 to 6, being further implemented to receive further receive signals (132) from further reference points and to determine the distance to further objects based thereon.

8. Road roller (100) comprising a device according to one of claims 1 to 7.

9. Method for determining the position of a road roller (100) relative to a road finisher (210), comprising:

transmitting transmit signals from the road roller (100) to at least two reference points mounted to the road finisher (210);
receiving a first receive signal (112) caused by the transmit signal from a first reference point (310) on the road finisher (210);
receiving a second receive signal (122) caused by the transmit signal from a second reference point (320) on the road finisher (210);
determining the position of the road roller (100) relative to the road finisher (210) based on a run time between transmitting the transmit signal and receiving the first receive signal (112) and a run time between transmitting the transmit signal and receiving the second receive signal (122); and
determining the number of times the road roller (100) has passed over a section of the road surface deposited by the road finisher (210) using the positions of the road roller (100) determined over time.

10. Method according to claim 9, wherein the first receive signal (112) comprises a first identification and the second receive signal (122) comprises a second identification.

11. Method according to one of claims 9 to 10, further comprising the following step:

determining a speed difference between the road roller (100) and the road finisher (210).

12. Method according to claim 11, further comprising the following step:

determining an absolute speed of the road finisher (210) on the basis of the speed difference and an absolute speed of the road roller (100).

13. Method according to one of claims 9 to 12, further comprising the following step:

determining the speed difference between the road roller (100) and the road finisher (210) based on the Doppler effect.

14. Method according to one of claims 9 to 13, further comprising the following step:

receiving further receive signals (132) from further reference points and, based thereon, determining the distance to further objects.

15. Method for constructing a road, comprising:

depositing a road surface by a road finisher (210); and
compacting the road surface by a road roller (100) using a method according to one of claims 9 to 14.

**Revendications**

1. Dispositif pour d'eterminer la position d'un rouleau compresseur (100) par rapport à un finisseur (210), aux caractéristiques suivantes:

un moyen d'émission et de réception (100) pouvant être placé sur le rouleau compresseur, destiné à envoyer des signaux d'émission et à recevoir des signaux de réception (112, 122) provoqués par le signal d'émission d'au moins deux points de référence (310, 320) distants l'un de l'autre sur le finisseur (210); et
une unité d'évaluation (150) destinée à déterminer la position du rouleau compresseur (100) par rapport au finisseur (210) sur base d'un temps de propagation entre l'émission du signal d'émission et la réception d'un premier signal de réception (112) du premier point de référence (310) et d'un temps de propagation entre l'émission du signal d'émission et la réception d'un deuxième signal de réception (122) du deuxième point de référence (320),

l'unité d'évaluation étant réalisée de manière à déterminer le nombre de passages du rouleau compresseur (100) sur un segment du revêtement routier appliqué par le finisseur (210) à l'aide des positions du rouleau compresseur (100) déterminées dans le temps.

2. Dispositif selon la revendication 1, dans lequel le premier signal de réception (112) présente une première identification et le deuxième signal de réception (122) présente une deuxième identification.

3. Dispositif selon la revendication 1 ou la revendication 2, dans lequel le ou les points de référence présentent des transpondeurs.

4. Dispositif selon l'une des revendications 1 à 3, présentant par ailleurs un moyen destiné à déterminer une différence de vitesse entre le rouleau compresseur (100) et le finisseur (210).

5. Dispositif selon la revendication 4, présentant par ailleurs un moyen destiné à déterminer une vitesse absolue du finisseur (210) sur base de la différence de vitesse et d'une vitesse absolue du rouleau compresseur (100).

6. Dispositif selon l'une des revendications 1 à 5, présentant par ailleurs un moyen destiné à déterminer une différence de vitesse entre le rouleau compresseur (100) et le finisseur (210) sur base de l'effet de Doppler.

7. Dispositif selon l'une des revendications 1 à 6, qui est par ailleurs réalisé de manière à recevoir d'autres signaux de réception (132) d'autres points de référence et à déterminer sur base de ceux-ci la distance par rapport à d'autres objets.

8. Rouleau compresseur (100) avec un dispositif selon l'une des revendications 1 à 7.

9. Procédé pour déterminer la position d'un rouleau compresseur (100) par rapport à un finisseur (210), aux étapes suivantes consistant à:

envoyer des signaux d'émission du rouleau compresseur (100) à au moins deux points de référence placés sur le finisseur (210);

recevoir un premier signal de réception (112) provoqué par le signal d'émission d'un premier point de référence (310) sur le finisseur (210);

recevoir un deuxième signal de réception (122) provoqué par le signal d'émission d'un deuxième point de référence (320) sur le finisseur (210);

déterminer la position du rouleau compresseur (100) par rapport au finisseur (210) sur base d'un temps de propagation entre l'émission du signal d'émission et la réception du premier signal de réception (112) et d'un temps de propagation entre l'émission du signal d'émission et la réception du deuxième signal de réception (122); et

déterminer le nombre de passages du rouleau compresseur (100) sur un segment du revêtement routier appliqué par le finisseur (210) à l'aide des positions du rouleau compresseur (100) déterminées dans le temps.

10. Procédé selon la revendication 9, dans lequel le premier signal de réception (112) présente une première identification et le deuxième signal de réception (122) présente une deuxième identification.

11. Procédé selon l'une des revendications 9 à 10, présentant par ailleurs l'étape suivante consistant à:

déterminer une différence de vitesse entre le rouleau compresseur (100) et le finisseur (210).

12. Procédé selon la revendication 11, présentant par ailleurs l'étape suivante consistant à:

déterminer une vitesse absolue du finisseur (210) sur base de la différence de vitesse et d'une vitesse absolue du rouleau compresseur (100).

13. Procédé selon l'une des revendications 9 à 12, présentant par ailleurs l'étape suivante consistant à:

déterminer la différence de vitesse entre le rouleau compresseur (100) et le finisseur (210) sur base de l'effet de Doppler.

**14.** Procédé selon l'une des revendications 9 à 13, présentant par ailleurs l'étape suivante consistant à:

recevoir d'autres signaux de réception (132) d'autres points de référence et déterminer sur base de ceux-ci la distance par rapport à d'autres objets.

**15.** Procédé pour réaliser une route, aux étapes suivantes consistant à:

appliquer un revêtement routier par un finisseur (210); et
compacter le revêtement routier par un rouleau compresseur (100) à l'aide d'un procédé selon l'une des revendications 9 à 14.

# FIG 1

# FIG 2

# FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005015257 A
- EP 1708065 A
- US 5942679 A